**Europäisches Patentamt**

**European Patent Office**

**Office européen des brevets**

(19)

(11) Veröffentlichungsnummer : **0 001 303**
**B2**

# (12) NEUE EUROPÄISCHE PATENTSCHRIFT

(45) Veröffentlichungstag der neuen Patentschrift : **24.08.83**

(21) Anmeldenummer : **78200148.1**

(22) Anmeldetag : **21.08.78**

(51) Int. Cl.³ : **B 60 T 15/12**, B 60 T 15/14

---

(54) **Führerbremsventil für eine indirekt wirkende Druckluftbremse.**

---

(30) Priorität : 16.09.77 CH 11330/77

(43) Veröffentlichungstag der Anmeldung :
04.04.79 Patentblatt 79/07

(45) Bekanntmachung des Hinweises auf die Patenterteilung : 23.07.80 Patentblatt 80/15

(45) Bekanntmachung des Hinweises auf die Entscheidung
über den Einspruch : 24.08.83 Patentblatt 83/34

(84) Benannte Vertragsstaaten :
BE DE FR GB SE

(56) Entgegenhaltungen :
CH A 523 161
DE A 1 605 242
DE A 2 018 907
DE A 2 022 233
DE B 1 150 703
DE B 1 160 876
DE C 967 166
GB A 1 291 230

Schwedische Staatsbahn. Beschreibung SJSt-
1445, Juni 1956

(73) Patentinhaber : **Werkzeugmaschinenfabrik Oerli-
kon-Bührle AG**
**Birchstrasse 155**
**CH-8050 Zürich (CH)**

(72) Erfinder : **Müller, Walter**
**Rebenweg 10**
**CH-8303 Bassersdorf (CH)**
Erfinder : **Deutsch, Heinz**
**Kreuzwiesen 17**
**CH-8051 Zürich (CH)**
Erfinder : **Oldani, Karl**
**Leimgrübelstrasse 18**
**CH-8052 ZÜRICH (CH)**

## Führerbremsventil für eine indirekt wirkende Druckluftbremse

Die Erfindung betrifft ein Führerbremsventil für eine indirekt wirkende Druckluftbremse mit einem Druckluftregler, einer Steuerleitung, einem Hauptsteuerventil und einer Einrichtung zum Erzeugen einer Niederdrucküberladung, welche einen mit dem Hauptsteuerventil wirkungsverbundenen Zusatzkolben und eine Ventilanordnung zur Beaufschlagung des Zusatzkolbens und zur Aufhebung der Beaufschlagung (Entlüftung) beim Bremsen aufweist, die über eine Zweigleitung und über einen Druckbegrenzer an eine Speiseleitung angeschlossen ist, wobei die Beaufschlagung mittels eines Betätigungskolbens aufhebbar ist.

Ein bekanntes Führerbremsventil dieser Art (GB-A-1 291 230) weist auf eine solche Einrichtung zur Steuerung einer Niederdrucküberladung auf. Zur Steuerung der Niederdrucküberladung dient der Druck im Bremszylinder. Dieser Bremszylinderdruck dient zur Betätigung einer einzigen Ventilanordnung sowohl zur Beaufschlagung des Zusatzkolbens als auch zur Aufhebung der Beaufschlagung, d. h. Entlüftung beim Bremsen.

Diese bekannte Einrichtung hat den Nachteil, dass die Steuerung der Niederdrucküberladung verhältnismässig spät erfolgt und dass nur eine einzige Ventilanordnung vorhanden ist, ausserdem ist eine lange Leitung vom Bremszylinder zum Führerbremsventil erforderlich.

Die Aufgabe, welche mit der vorliegenden Erfindung gelöst werden soll, besteht darin, eine Betriebsbremsung unmittelbar nach einer Niederdrucküberladung, d. h. solange in der Hauptluftleitung ein erhöhter Druck herrscht, wesentlich schneller als bei dem bekannten Führerbremsventil durchführen zu können und somit zu erleichtern.

Unter « Niederdrucküberladung » versteht man, dass in der Hauptluftleitung und in den Steuerbehältern ein Druck erzeugt wird, der etwas höher als der Betriebsdruck ist. Diese Niederdrucküberladung ist notwendig, um ein zuverlässiges Lösen aller Bremsen zu gewährleisten. Ein Überdruck in der Hauptluftleitung wirkt sich jedoch bei einer Betriebsbremsung störend aus.

Das erfindungsgemässe Führerbremsventil ist dadurch gekennzeichnet, dass die Aufhebung der Zusatzkolben-Beaufschlagung mittels eines separaten, durch den Betätigungskolben betätigbaren Entlüftungsventils erfolgt, und dass zum Oeffnen des Entlüftungsventils der Betätigungskolben vom sinkenden Druck der Steuerleitung und vom Druck der Zweigleitung beaufschlagbar ist.

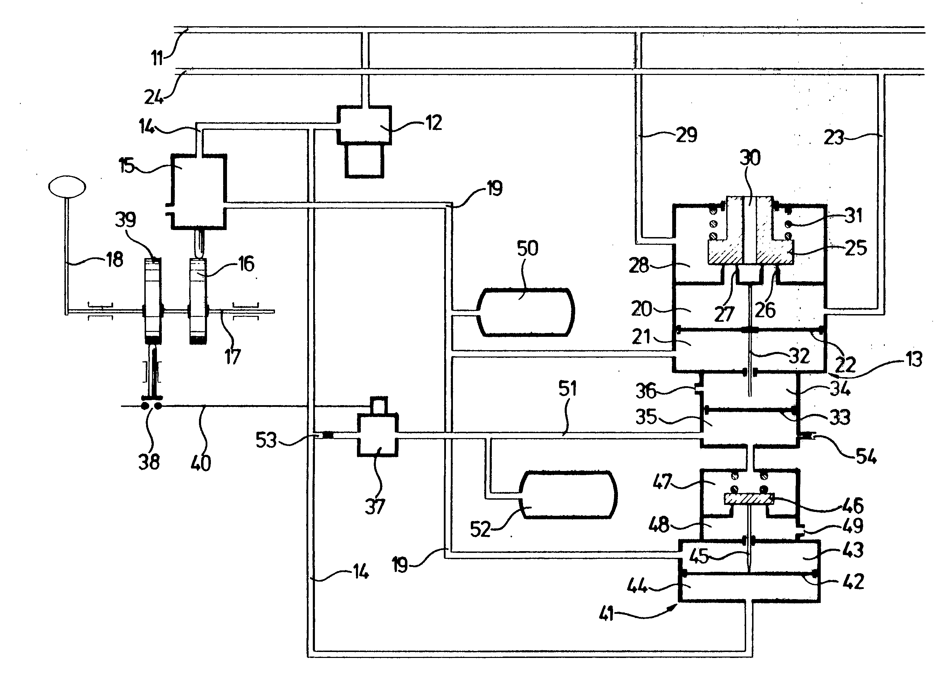

Ein Ausführungsbeispiel der erfindungsgemässen Druckluftbremse ist anhand der beigefügten Zeichnung im folgenden ausführlich beschrieben.

Die einzige Figur der Zeichnung zeigt eine schematische Darstellung der erfindungsgemässen Einrichtung.

An eine Speiseleitung 11 ist ein Druckbegrenzer 12 sowie ein Hauptsteuerventil 13 angeschlossen. Der Druckbegrenzer 12 sorgt dafür, dass unabhängig von Druckschwankungen in der Speiseleitung 11 in einer Zweigleitung 14 ein konstanter Druck herrscht. An die Zweigleitung 14 ist ein Druckregler 15 eines Führerbremsventils angeschlossen. Zur Betätigung des Druckreglers 15 ist eine Nockenscheibe 16 auf einer Welle 17 befestigt. Die Welle 17 ist drehbar gelagert und weist einen Führerbremshebel 18 auf. Mit Hilfe des Druckreglers 15 und des Führerbremshebels 18 kann in bekannter — daher hier nicht näher beschriebenen Weise — der Druck in einer an den Druckregler 15 angeschlossenen Steuerleitung 19 beliebig gesenkt und erhöht werden.

Das Hauptsteuerventil 13 weist zwei Kammern 20 und 21 auf, welche durch einen Kolben 22 voneinander getrennt sind. Die obere Kammer 20 ist über eine Zweigleitung 23 mit einer Hauptluftleitung 24 verbunden, und die untere Kammer 21 ist an die erwähnte Steuerleitung 19 angeschlossen. Das Hauptsteuerventil 13 weist einen Ventilteller 25 auf, der einerseits mit einem ortsfesten Ventilsitz 26 und anderseits mit einem beweglichen Ventilsitz 27 zusammenwirkt. Der Ventilteller 25 grenzt eine Ventilkammer 28 von der Kammer 20 ab. Diese Ventilkammer 28 ist über eine Zweigleitung 29 an die Speiseleitung 11 angeschlossen. Der Ventilteller 25 weist eine Entlüftungsbohrung 30 auf, die zum Entlüften der oberen Kammer 20 dient, wenn der bewegliche Ventilsitz 27 vom Ventilteller 25 abgehoben ist. Eine Feder 31, welche sich einerseits auf dem Ventilteller 25 und anderseits am Gehäuse des Hauptsteuerventils 13 abstützt, hat das Bestreben, den Ventilteller 25 gegen den ortsfesten Ventilsitz 26 zu drücken. Der erwähnte bewegliche Ventilsitz 27 ist über eine Kolbenstange 32 am Kolben 22 befestigt. Die Kolbenstange 32 ragt durch die untere Kammer 21 hindurch und stützt sich auf einen Zusatzkolben 33 ab. Dieser Zusatzkolben 33 grenzt ebenfalls zwei Kammern 34 und 35 voneinander ab, von denen die obere Kammer 34 ständig über eine Oeffnung 36 entlüftet ist und die untere Kammer 35 über ein elektropneumatisches Ventil 37 mit der Zweigleitung 14 verbunden ist. Beim Oeffnen des Ventils 37 herrscht somit der erwähnte konstante Druck in der unteren Kammer 35.

Zur Betätigung des elektropneumatischen Ventiles 37 is ein elektrischer Schalter 38 vorgesehen, der mit Hilfe einer Nockenscheibe 39 betätigbar ist. Die Nockenscheibe 39 ist ebenfalls auf der Welle 17 befestigt und kann somit durch den Führerbremshebel 18 beim Lösen der Bremse zur Erzeugung einer Niederdrucküberlastung betätigt werden. Der elektrische Schalter 38 ist über eine elektrische Leitung 40 mit dem elektropneumatischen Ventil 37 verbunden.

Zum Entlüften der Kammer 35 ist ein Ent-

lüftungsventil 41 vorhanden. Das Entlüftungsventil 41 besitzt einen Betätigungskolben 42, der zwei Kammern 43 und 44 voneinander abgrenzt. Die obere Kammer 43 ist mit der Steuerleitung 19 verbunden, und die untere Kammer 44 ist an die Zweigleitung 14 angeschlossen. Der Betätigungskolben 42 ist über eine Kolbenstange 45 mit einem Ventilteller 46 verbunden. Der Ventilteller 46 grenzt zwei Kammern 47 und 48 voneinander ab, von denen die obere Kammer 47 mit der Kammer 35 unter dem Zusatzkolben 33 verbunden ist und die untere Kammer 48 über eine Oeffnung 49 ständig entlüftet ist.

An die Steuerleitung 19 ist ein Steuerbehälter 50 und an die Leitung 51 zwischen dem elektropneumatischen Ventil 37 und der Kammer 35 — unterhalb des Zusatzkolbens 33 — ist ein weiterer Behälter 52 angeschlossen. Die Luftzufuhr zu diesem Behälter 52 und zur Kammer 35 wird bei geöffnetem elektropneumatischen Ventil 37 durch eine erste Drossel 53 gesteuert, und der Luftaustritt aus der Kammer 35 in die Atmosphäre wird durch eine zweite Drossel 54 gesteuert.

Die Wirkungsweise der beschriebenen Druckluftbremse ist wie folgt. Um vor Abfahrt eines Zuges die Bremsen zu lösen, wird der Führerbremshebel 18 derart geschwenkt, dass der Druckregler 15 den grösstmöglichen Druck in der Steuerleitung 19 und somit auch in der unteren Kammer 21 des Hauptsteuerventiles 13 erzeugt. Bei dieser Stellung des Führerbremshebels 18 ist der elektrische Schalter 38 geschlossen, wodurch das elektropneumatische Ventil 37 offen ist. Aus der Zweigleitung 14 fliesst somit Druckluft in die untere Kammer 35 unterhalb des Zusatzkolbens 33, wobei die Drossel 53 und der Behälter 52 eine Verzögerung bewirken. Durch diese maximale Beaufschlagung des Kolbens 22 und des Zusatzkolbens 33 wird der Ventilteller 25 von einem ortsfesten Ventilsitz 26 abgehoben und aus der Speiseleitung 11 fliesst Druckluft über Zweigleitung 29, Ventilkammer 28, obere Kammer 20 und Zweigleitung 23 in die Hauptluftleitung. Dabei wächst der Druck in der Kammer 20 oberhalb des Kolbens 22 solange, bis die Drücke in den drei Kammern 20, 21 und 35 im Gleichgewicht sind und das Hauptsteuerventil 13 in die gezeigte Abschlussstellung gelangt. In dieser Abschlussstellung strömt Druckluft aus der Kammer 35 durch die Drossel 54 in die Atmosphäre und zur Aufrechterhaltung des Gleichgewichts muss auch Druckluft aus der Kammer 20 durch die Entlüftungsöffnung 30 in die Atmosphäre entweichen können, wodurch der Druck in der Hauptluftleitung 24 langsam absinkt.

Soll während dieses Vorganges gebremst werden, muss der Ueberdruck in der Hauptluftleitung 24 schneller als soeben beschrieben abgebaut werden. Dies geschieht wie folgt :

Zum Bremsen wird der Führerbremshebel 18 derart geschwenkt, dass der Druckregler 15 eine entsprechende Druckabsenkung in der Steuerleitung 19 erzeugt. Diese Druckabsenkung in der Steuerleitung 19 wirkt sich gleichzeitig im Hauptsteuerventil 13 und im Entlüftungsventil 41 aus. Im Entlüftungsventil 41 sinkt der Druck in der Kammer 43 und der Betätigungskolben 42 hebt den Ventilteller 46 von seinem ortsfesten Ventilsitz ab, wodurch die Kammer 35 unterhalb des Zusatzkolbens 33 vollständig über die Kammern 47 und 48 sowie die Oeffnung 49 entlüftet wird. Im Hauptsteuerventil 13 sinkt der Druck in der Kammer 21 unterhalb des Kolbens 22. Somit sind im Hauptsteuerventil 13 sowohl der Kolben 22 als auch der Zusatzkolben 33 auf ihrer unteren Seite entlastet worden. Diese beiden Kolben 22 und 33 senken sich und Druckluft strömt aus Kammer 20 und über Zweigleitung 23 aus der Hauptluftleitung 24 durch die Entlüftungsbohrung 30 in die Atmosphäre.

Durch die Entlüftung der Kammer 35 unterhalb des Zusatzkolbens 33 verschwindet sofort der Ueberdruck in der Hauptluftleitung 24 und der Bremsvorgang kann ungestört in üblicher Weise durchgeführt werden.'

**Anspruch**

Führerbremsventil für eine indirekt wirkende Druckluftbremse mit einem Druckluftregler (15), einer Steuerleitung (19), einem Hauptsteuerventil (13) und einer Einrichtung (33, 37) zum Erzeugen einer Niederdrucküberladung, welche einen mit dem Hauptsteuerventil (13) wirkungsverbundenen Zusatzkolben (33) und eine Ventilanordnung zur Beaufschlagung (37) des Zusatzkolbens (33) und zur Aufhebung der Beaufschlagung (Entlüftung) beim Bremsen aufweist, die über eine Zweigleitung (14) und über einen Druckbegrenzer (12) an eine Speiseleitung (11) angeschlossen ist, wobei die Beaufschlagung mittels eines Betätigungskolbens (42) aufhebbar ist, dadurch gekennzeichnet, dass die Aufhebung der Zusatzkolben-Beaufschlagung mittels eines separaten, durch den Betätigungskolben (42) betätigbaren Entlüftungsventils (41) erfolgt, und dass zum Oeffnen des Entlüftungsventils (41) der Betätigungskolben (42) vom sinkenden Druck der Steuerleitung (19) und vom Druck der Zweigleitung (14) beaufschlagbar ist.

**Claim**

A driver's brake-valve for an indirectly acting compressed-air brake comprising : A pressure-controller (15), a control pipe (19), a main control valve (13) and a device (33, 37) for generating a low-pressure overload, which have an auxiliary piston (33) connected with said main control valve (13) and a valve (37) loading the auxiliary piston (33) and for cancelling the load (venting) when braking, which is connected over a branch pipe (14) and over a pressure limiter (12) to a supply pipe (11), whereby the load can be cancelled by an actuating piston (42), characterised in that the load of the auxiliary piston (33) can be cancelled by a separate vent valve (41) actuated by that actuating piston (42) and that for opening the vent valve (41) the actuating piston (42) is loaded from the decreasing pressure in the control pipe (19) and from the pressure in the branch pipe (14).

## Revendication

Soupape pilote de frein pour un frein à air comprimé à action indirecte, avec un régulateur (15) de pression d'air, une canalisation de commande (19), une soupape de commande principale (13), et une installation (33, 37) permettant d'obtenir une surcharge à basse pression, installation comportant un piston supplémentaire (33) én liaison opérationnelle avec la soupape de commande principale (13), et un dispositif de soupape (37) pour solliciter le piston supplémentaire (33) et pour suspendre cette sollicitation (évacuation d'air) lors du freinage, ce dispositif de soupape étant raccordé par l'intermédiaire d'une canalisation dérivée (14) et par l'intermédiaire d'un limiteur de pression (12) à une canalisation d'alimentation (11), cette sollicitation étant susceptible d'être suspendue au moyen d'un piston de manœuvre (42), soupape pilote de frein caractérisée en ce que la suspension de la sollicitation du piston supplémentaire s'effectue au moyen d'une soupape d'évacuation d'air (41) distincte susceptible d'être actionnée par le piston de manœuvre (42), cependant que pour l'ouverture de la soupape d'évacuation d'air (41), le piston de manœuvre (42) est susceptible d'être sollicité par la pression décroissante de la canalisation de commande (19) et par la pression de la canalisation dérivée (14).